# EUROPÄISCHE PATENTSCHRIFT

(11) **EP 4 625 443 B1**
(45) Veröffentlichungstag und Bekanntmachung des Hinweises auf die Patenterteilung: **28.10.2026**
(21) Anmeldenummer: 25153742.9
(22) Anmeldetag: 24.01.2025
(51) Int. Cl.: H01B 13/00, H01R 43/28

(54) **VORRICHTUNG UND VERFAHREN ZUM DREHEN EINER LEITUNG**
APPARATUS AND METHOD FOR ROTATING A CONDUIT
APPAREIL ET PROCÉDÉ POUR FAIRE TOURNER UN CONDUIT

(30) Priorität: 27.03.2024 DE 102024108769
(43) Veröffentlichungstag der Anmeldung: 01.10.2025
(73) Patentinhaber: MD ELEKTRONIK GmbH, 84478 Waldkraiburg (DE)
(72) Erfinder: Strauß, Benedikt, 83559 Mittergars (DE)

(56) Entgegenhaltungen:
- CN-A- 108 190 616
- CN-B- 108 154 973

## Beschreibung

### Technisches Gebiet

Die Erfindung betrifft eine Vorrichtung und ein Verfahren zum Drehen einer Leitung, insbesondere einer Leitung zur elektrischen und/oder optischen Datenübertragung, bevorzugt bei einer Anlage zur Kabelkonfektion.

### Stand der Technik

Das Drehen einer Leitung um ihre (Längs-)Achse ist ein durchaus notwendiger Schritt in der Kabelkonfektion. Insbesondere bei mehradrigen Leitungen kann der Schritt des Drehens notwendig sein, da hier die Adernposition an der Wurzel der Leitung oft in die Waagerechte ausgerichtet werden muss, um eine Bearbeitung in darauffolgenden Prozessschritten zu ermöglichen. In der Praxis ist die Anfangsausrichtung bzw. Adernposition oft beliebig, wodurch die Leitung zwingend gedreht werden muss.

Im Stand der Technik sind zumindest zwei Möglichkeiten zum Drehen einer Leitung beschrieben. Bei der ersten Möglichkeit erfolgt ein stirnseitiges Drehen der Leitung, d.h. die Leitung wird zumindest mit ihrem freien Leitungsende in eine Drehvorrichtung eingeführt und gedreht. Bei der zweiten Möglichkeit erfolgt ein Drehen der Leitung mit Hilfe eines Riemens, der die Leitung kontaktiert und über Reibschluss dreht. Die erste Möglichkeit hat den Nachteil, dass es wie bei jeder Drehung der Leitung, zu einer Tordierung der restlichen Leitungslänge kommen kann, insbesondere bei gecoilten Leitungen. Folglich ist auch der gespannte Bereich der Leitung im Leitungsspanner nicht frei von Torsionskräften. Diese Kräfte können zu einer nachträglichen, ungewollten Verdrehung der Leitung führen. Die zweite Möglichkeit hat den Effekt, dass die Leitung erst hinter dem Leitungsspanner, d.h. auf der dem freien Leitungsende abgewandten Seite des Leitungsspanners, gedreht wird, wodurch der gespannte Bereich torsionsfrei bleibt. Allerdings hat die zweite Möglichkeit den Nachteil, dass der Riemen das Kontaktelement zur Leitung darstellt, wobei der Riemen nicht beliebig in seiner Struktur verändert werden kann, um optimalen Reibschluss zu erhalten.

Das Dokument CN108154973B offenbart einen Drehmechanismus für Kabelbäume sowie eine Kabelbaummaschine.

### Beschreibung der Erfindung

Es ist daher eine Aufgabe der vorliegenden Erfindung eine Vorrichtung und ein Verfahren zum Drehen einer Leitung bereitzustellen, die flexibel an Gegebenheiten angepasst werden können, und die die zu drehende Leitung so wenig wie möglich nachteilig beeinflussen.

Die oben genannte Aufgabe wird durch eine Vorrichtung zum Drehen einer Leitung nach Anspruch 1und ein Verfahren zum Drehen einer Leitung nach Anspruch 7 gelöst. Weitere vorteilhafte Ausgestaltungsformen der Erfindung lassen sich den Unteransprüchen, der Beschreibung sowie den Zeichnungen entnehmen.

Insbesondere wird die oben genannte Aufgabe gelöst durch eine Vorrichtung zum Drehen einer Leitung aufweisend ein Riemengetriebe mit einem Riemen und einem Antrieb zum Bewegen des Riemens, eine Greifeinheit zum Greifen der Leitung, wobei die Greifeinheit zumindest ein erstes und ein zweites Greifelement aufweist, das erste und zweite Greifelement zwischen einem geöffneten und einem geschlossenen Zustand der Greifeinheit bewegt werden kann, und das erste und zweite Greifelement mit dem Riemengetriebe verbunden ist, zumindest zwei Drehrollen, die jeweils an dem ersten und zweiten Greifelement angeordnet sind, mit dem Riemen in Verbindung stehen, und über das Riemengetriebe gedreht werden können, wobei die gegriffene Leitung im geschlossenen Zustand der Greifeinheit über die zumindest zwei Drehrollen an jedem Greifelement kontaktierbar ist und durch die Drehrollen in Drehung versetzt werden kann.

Die vorliegende Vorrichtung kann eine Drehung der Leitung, d.h. eine Drehung oder Rotation um die Längsachse der Leitung, durchführen. Die Drehung kann dabei eine Endlosdrehung umfassen. Weiterhin ermöglicht die vorliegende Vorrichtung ein Greifen und Drehen der Leitung in einer Vorrichtung. Damit wird der Aufbau, insbesondere bei einer Integration in einer Kabelkonfektionsanlage, sehr kompakt. Schließlich sind die kontaktierenden Elemente zur Übertragung der Drehbewegung von der Vorrichtung auf die Leitung nicht wie im Stand der Technik der Riemen eines Riemenantriebs, sondern Drehrollen, die von dem Riemenantrieb angetrieben werden und ihre Drehbewegung auf die Leitung übertragen. Die Drehrollen können nach Belieben beschichtet oder in Ihrer Rauigkeit definiert sein, um einen optimalen Reibschluss zur Leitung bereitzustellen.

Bevorzugt werden die Drehrollen synchron gedreht. Synchron gedreht meint dabei zeitlich synchron, um den gleichen Winkel und/oder in die gleiche Drehrichtung, so dass sich die Leitung in eine Richtung dreht. Durch die synchrone Drehung aller Drehrollen kann eine präzise Drehung der Leitung erreicht werden.

Bevorzugt weisen die Oberflächen der Drehrollen eine vorbestimmte Rauigkeit auf, um eine optimale Haftreibung mit der Leitung zu erreichen. Eine optimale Haftreibung bedeutet, dass weder ein Gleiten noch ein Kriechen zwischen bzw. von Drehrollen und Leitung auftritt. Kriechen meint das (allmähliche) Verformen von Drehrollen und Leitung aufgrund zu hoher Reibung. Mit einer optimalen Haftreibung kann ein sehr präzises und vor allem schnelles Drehen der Leitung ohne aufwendiges Nachregeln sichergestellt werden.

Bevorzugt weist die Vorrichtung weiterhin zumindest zwei Führungsrollen auf, die jeweils an dem ersten und zweiten Greifelement angeordnet sind, um den Riemen entlang einer dritten Richtung, quer, insbesondere senkrecht, zur ersten Richtung, zu führen.

Bevorzugt sind die zumindest zwei Drehrollen am ersten und zweiten Greifelement zwischen den jeweils zumindest zwei Führungsrollen angeordnet, und die Drehrollen sind in einer ersten Ebene und die Führungsrollen in einer zweiten Ebene angeordnet, wobei die erste und die zweite Ebene zueinander parallel verschoben sind, so dass der Riemen mit einem Versatz auf die Drehrollen wirkt. Durch die versetzte Anordnung der Drehrollen zu den Führungsrollen muss der Riemen einen zusätzlichen (Um-)Weg nehmen, um von einer Führungsrolle über die Drehrollen zur anderen Führungsrolle zu gelangen. Die Abweichung vom direkten Weg hat den Effekt, dass ein größerer Umschlingungswinkel und damit eine größere Kontaktfläche zwischen Riemen und den Drehrollen vorliegt. Durch die größere Kontaktfläche gibt es eine sehr gute Haftreibung zwischen dem Riemen und den Drehrollen, so dass die Drehrollen optimal und sehr präzise von dem Riemen angetrieben bzw. in Drehung versetzt werden können.

Bevorzugt kann die Greifeinheit entlang einer dritten Richtung, insbesondere senkrecht, zur Leitung bewegt werden, und kann die Leitung greifen und drehen. Die Bewegbarkeit der Greifeinheit in Richtung der Leitung erhöht die Flexibilität der Vorrichtung. Die Leitung kann an unterschiedlichen, passenden Stellen gegriffen und gedreht werden. Insbesondere kann die gesamte Leitung, wenn sie an einer passenden Stelle gegriffen und gedreht wird, torsionsfrei gedreht werden.

Die oben genannte Aufgabe kann weiterhin insbesondere gelöst werden durch ein Verfahren zum Drehen einer Leitung aufweisend die Schritte: Positionieren der zu drehenden Leitung entlang einer ersten Richtung, Greifen der Leitung, indem zumindest ein erstes und ein zweites Greifelement einer Greifeinheit entlang einer zweiten Richtung, die quer, insbesondere senkrecht, zur ersten Richtung liegt, aufeinander zu und dabei auf die Leitung zu bewegt werden, bis Drehrollen an dem ersten und zweiten Greifelement in Kontakt mit der Leitung kommen, Antreiben eines Riemens eines Riemengetriebes, der in Verbindung mit den Drehrollen steht, so dass die Drehrollen in Drehung versetzt werden, und dadurch die Leitung um eine Achse entlang der ersten Richtung gedreht wird.

Das vorliegende Verfahren hat den Vorteil, dass ein endlos Drehen der Leitung möglich ist. Durch die Kontaktierung der Leitung über die Drehrollen kann ein optimaler Reibschluss erzeugt werden, in dem zu jeder Leitung bzw. zu jedem Leitungstyp Drehrollen mit einer dazu optimal passenden Rauigkeit ausgewählt, eingebaut und verwendet werden. Das Antreiben des Riemens kann sehr präzise gesteuert werden, so dass eine präzise Ausrichtung der Leitung möglich ist.

Bevorzugt weist das Verfahren weiterhin den Schritt auf: Positionieren der Greifeinheit an einer beliebigen Stelle entlang der Leitung, und Bewegen der Greifeinheit entlang einer dritten Richtung quer, insbesondere senkrecht, zur ersten Richtung, bis die Leitung entlang der Achse zentrisch zwischen den Drehrollen angeordnet ist. Durch das Bewegen der Greifeinheit, bis eine zentrische Ausrichtung der Leitung zwischen den Drehrollen erreicht ist, ermöglicht es mit einer einfachen Linearbewegung des ersten und zweiten Greifelements die Greifeinheit in einen geschlossenen Zustand zu bringen und die Leitung drehbar zu greifen. Durch das zentrische Anordnen der Leitung zwischen den Drehrollen ist die Leitung sicher gehalten.

Bevorzugt weist das Verfahren weiterhin die Schritte auf: Drehen der gegriffenen Leitung um die Achse entlang der ersten Richtung bis eine gewünschte Ausrichtung der Leitung erreicht ist, und danach Lösen der Leitung von der Greifeinheit, indem zumindest das erste und das zweite Greifelement der Greifeinheit entlang der zweiten Richtung voneinander weg und dabei von der Leitung wegbewegt werden.

Die folgende Beschreibung von Ausführungsformen erfolgt unter Bezugnahme auf die begleitenden Figuren. Dabei zeigt:
- Fig. 1: eine schematische Darstellung einer Ausführungsform einer Vorrichtung zum Drehen einer Leitung;
- Fig. 2: eine Detailansicht der Ausführungsform im geöffneten Zustand;
- Fig. 3: eine Detailansicht der Ausführungsform im geschlossenen Zustand mit einer gegriffenen Leitung; und
- Fig. 4.: die Detailansicht aus Fig. 3 mit eingezeichneten Ebenen und Drehungen.

Im Folgenden werden bevorzugte Ausführungsformen im Detail mit Bezug auf die beigefügten Figuren beschrieben.

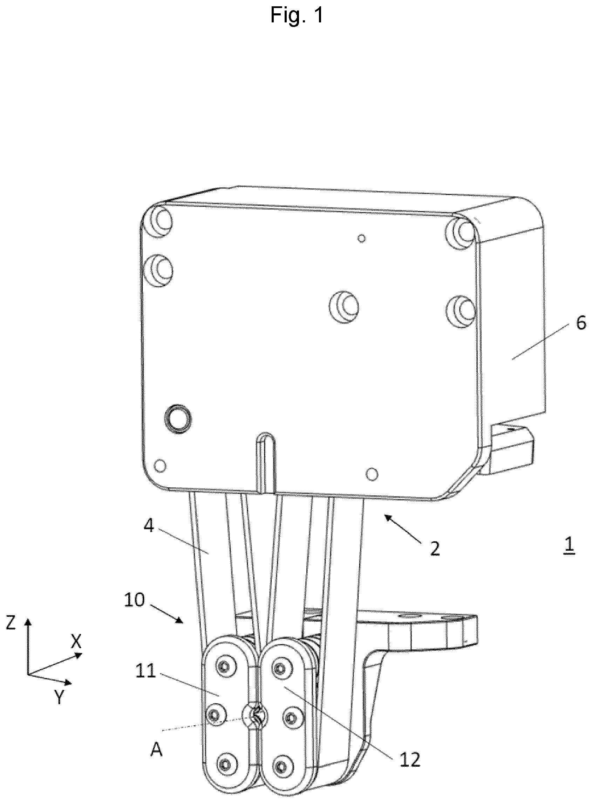

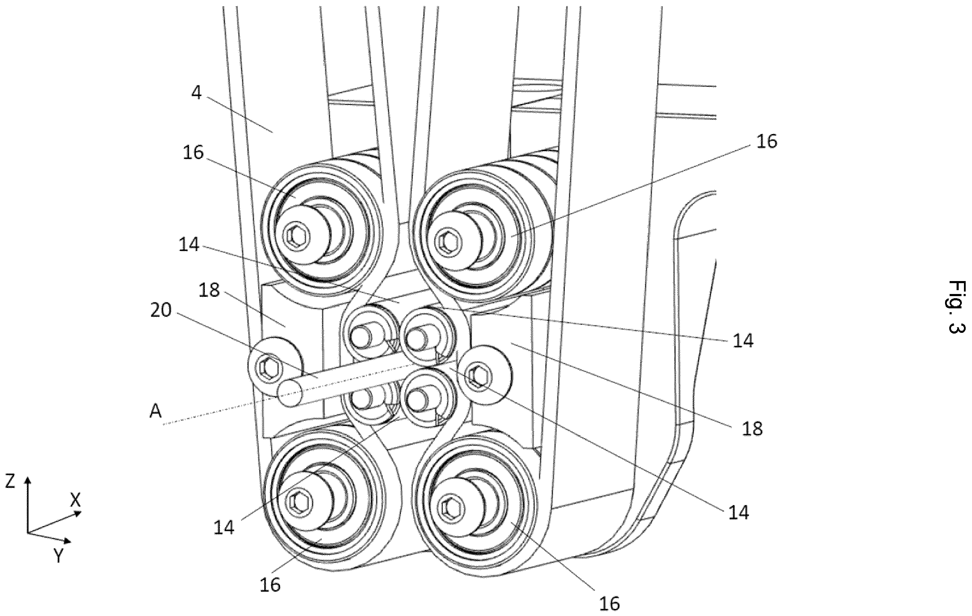

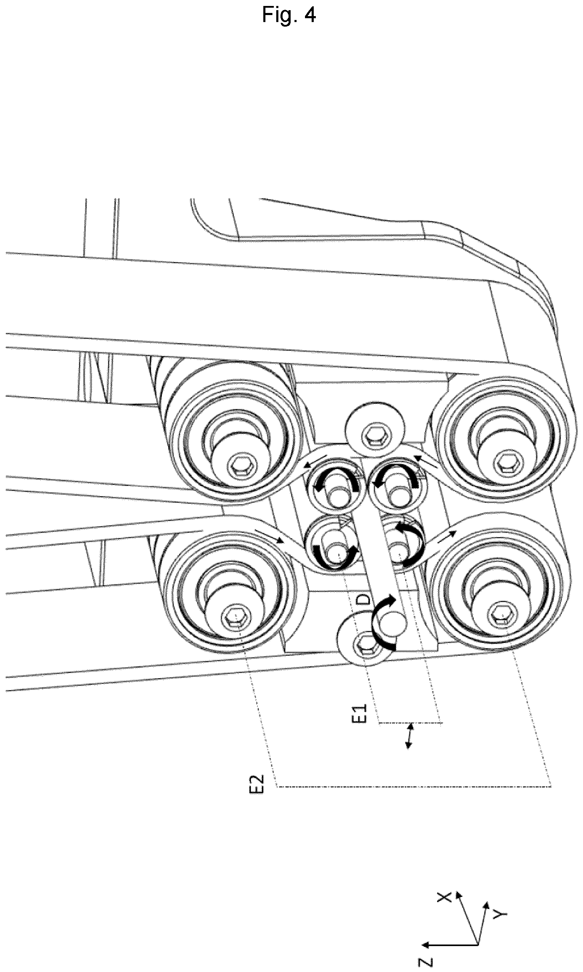

Fig. 1 zeigt eine Ausführungsform einer Vorrichtung 1 zum Drehen einer Leitung 20. Die in Figs. 3 und 4 dargestellte Leitung 20 ist eine zweiadrige Leitung zur elektrischen Datenübertragung. In alternativen Ausführungsformen können Leitungen mit beliebig vielen Adern sowie zur elektrischen und/oder optischen Datenübertragung gedreht werden.

Die dargestellte Vorrichtung 1 weist zumindest ein Riemengetriebe 2 mit einem Riemen 4 und einem Antrieb 6 auf. Der Antrieb 6 ist zum Bewegen des Riemens 4 eingerichtet. Der Riemen 4 des Riemenantriebs 2 bewegt sich auf einem festgelegten Weg bzw. einer festgelegten Bahn. Über den Antrieb 6 kann die Dauer, Richtung und Geschwindigkeit der Bewegung des Riemens 4 gesteuert werden.

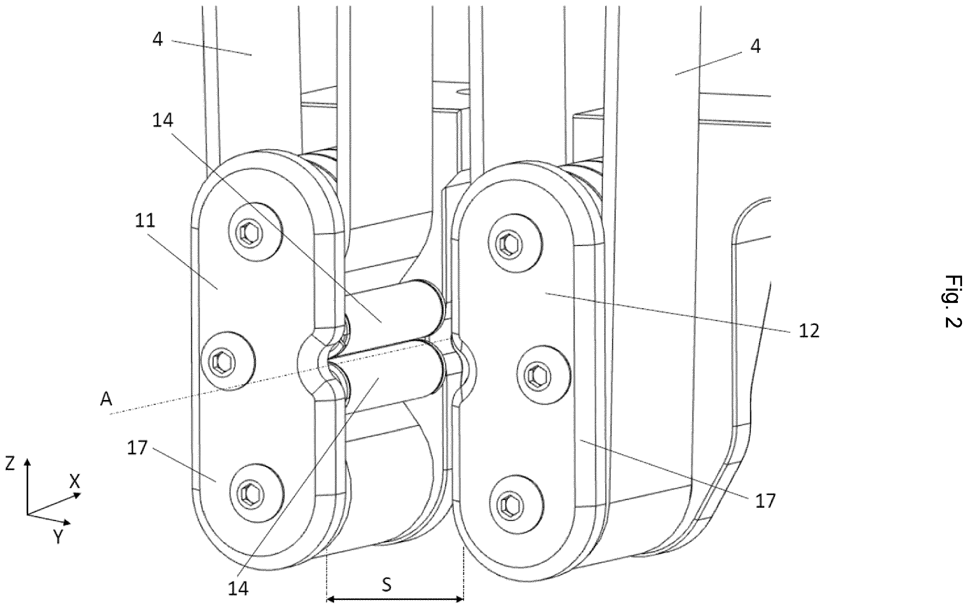

Die dargestellte Vorrichtung 1 weist weiterhin eine Greifeinheit 10 zum Greifen der Leitung 20 auf. Die Greifeinheit 10 umfasst zumindest ein erstes und ein zweites Greifelement 11, 12. Die Greifelemente 11, 12 der Greifeinheit 10 sind bevorzugt spiegelsymmetrisch zu einer Ebene entlang einer Achse A (entlang einer ersten Richtung X) gebildet. Das erste und zweite Greifelement 11, 12 kann zwischen einem geöffneten und einem geschlossenen Zustand der Greifeinheit 10 bewegt werden. Im geöffneten Zustand ist ein Spalt S mit einer vorbestimmten Breite zwischen dem ersten und zweiten Greifelement 11, 12 gebildet. Der Spalt S ist bevorzugt so breit, dass eine zu greifende Leitung 20 problemlos zwischen dem ersten und zweiten Greifelement 11, 12 angeordnet werden kann (s. Fig. 2). Im geschlossenen Zustand ist der Spalt S geschlossen, so dass eine Leitung 20 zwischen dem ersten und zweiten Greifelement 11, 12 gegriffen oder befestigt (drehbar geklemmt) werden kann (s. Figs. 3 und 4). Das erste und zweite Greifelement 11, 12 kann jeweils über einen separaten oder einen gemeinsamen Aktuator zwischen dem geöffneten und dem geschlossenen Zustand verschoben werden. Die Greifeinheit 10 kann weiterhin entlang einer dritten Richtung Z zur Leitung 20 bewegt werden. Durch freie Bewegbarkeit der Greifeinheit 10, kann die Greifeinheit 10 an einer beliebigen Position der Leitung 20 die Leitung 20 greifen und drehen. Zudem erfolgt das Greifen und Drehen der Leitung 20 in einer (einzigen) Vorrichtung 1. Dadurch ist die Vorrichtung 1 sehr kompakt und flexibel einsetzbar.

Das erste und zweite Greifelement 11, 12 ist weiterhin mit dem Riemengetriebe 2 verbunden. Bevorzugt ist der Antrieb 6 des Riemengetriebes 2 von der Greifvorrichtung 10 beabstandet angeordnet, so dass der Antrieb 6 beim Greifen und Drehen der Leitung 20 nicht stört. Über den Riemen 4 ist die Greifvorrichtung 10 jedoch mit dem Riemengetriebe 2 verbunden. Insbesondere führt der Weg des Riemens 4 als Schleife von dem Antrieb 6 über das erste und zweite Greifelement 11, 12. Zwischen dem ersten und zweiten Greifelement 11, 12 wird die Richtung des Riemens in Bezug auf die zu drehende Leitung 20, bevorzugt am Antrieb 6, um 180 Grad umgelenkt. Durch das Umlenken der Richtung des Riemens 4 in Bezug auf die Leitung 20 kann der gleiche Riemen 4 mit der fortlaufenden Bewegungsrichtung entlang des Riemengetriebes 2 an zumindest zwei Seiten der Leitung 20 auf Drehrollen 14 wirken und dadurch die Leitung 20 immer in dieselbe Drehung D bzw. Drehrichtung drehen.

Die zumindest zwei Drehrollen 14, die jeweils an dem ersten und zweiten Greifelement 11, 12 angeordnet sind, stehen mit dem Riemen 4 in Verbindung. In Verbindung stehen heißt, so zu kontaktieren, dass ein Reibschluss wirkt und die Bewegung des Riemens 4 auf die Drehrollen 14 überträgt, so dass die Drehrollen 14 über das Riemengetriebe 2 gedreht werden können. Die Anzahl der Drehrollen 14 pro Greifelement 11, 12 ist bevorzugt gleich groß und beträgt mindestens zwei Drehrollen 14 pro Greifelement 11, 12, so dass die Leitung 20 von zumindest vier Drehrollen 14 insgesamt gehalten und gedreht wird. Eine höhere Anzahl an Drehrollen 14 ist in alternativen Ausführungsformen möglich. Die Drehrollen 14 des ersten Greifelements 11 sind bevorzugt symmetrisch zur Achse A mit den Drehrollen 14 des zweiten Greifelements 12 angeordnet, um einen gleichmäßigen Griff der Leitung 20 und eine gleichmäßige Drehung D zu erreichen. Die gegriffene Leitung 20 ist im geschlossenen Zustand der Greifeinheit 10 über die zumindest zwei Drehrollen 14 an jedem Greifelement 11, 12 kontaktierbar. Weiterhin kann die gegriffene Leitung 20 durch die Drehrollen 14 in Drehung D versetzt werden. Zum Drehen werden die Drehrollen 14 bevorzugt synchron gedreht. Die synchrone Drehung ist durch das Umlenken des Riemens 4 durch den gleichen Riemen 4 des Riemengetriebes 2 ohne weiteres möglich.

Damit eine präzise Drehung D bei jeder Leitung 20 bzw. jedem Leitungstyp erfolgen kann, weisen die Oberflächen der Drehrollen 14 eine vorbestimmte Rauigkeit auf. Eine abgestimmte Rauigkeit der Oberflächen der Drehrollen 14 mit der Rauigkeit bzw. dem Material der zu drehenden Leitung 20 dient dazu eine optimale Haftreibung der Drehrollen 14 mit der Leitung 20 zu erreichen. In einer bevorzugten Ausführungsform liegt die Rauigkeit der Drehrollen 14 in einem Bereich von Ra 5 - 25 µm, bevorzugter in einem Bereich von Ra 10 - 20 µm, und am bevorzugtesten in einem Bereich von Ra 12 - 13 µm. Damit die Drehrollen 14 flexibel für jede Leitung 20 angepasst werden können, sind die Drehrollen 14 auswechselbar an dem ersten und zweiten Greifelement 11, 12 angeordnet.

In einer optionalen Ausführungsform sind die Drehrollen 14 auswechselbar an dem ersten und zweiten Greifelement 11, 12 angeordnet. Durch die Auswechselbarkeit können die Drehrollen 14 schnell und einfach an verschiedene Leitungstypen angepasst werden. Die Vorrichtung kann flexibel umgestaltet werden. Die Anpassung von Drehrollen 14 und Leitung 20 optimiert den Drehprozess, insbesondere in Bezug auf die Präzision der Drehung und Unversehrtheit der Leitung 20.

Neben den Drehrollen 14 weist die dargestellte Vorrichtung 1 weiterhin zumindest zwei Führungsrollen 16 auf, die jeweils an dem ersten und zweiten Greifelement 11, 12 angeordnet sind. Die Führungsrollen 16 sind bevorzugt eingerichtet, um den Riemen 4 entlang einer dritten Richtung Z, quer, insbesondere senkrecht, zur ersten Richtung X, zu führen. Zwischen den Führungsrollen 16 in einem Greifelement 11, 12 können zusätzlich Aussteifungen 18 angeordnet sein. Die Aussteifungen 18 weisen insbesondere eine sehr glatte Oberfläche auf, damit die Reibung mit dem Riemen 4, der über die Aussteifungen 18 läuft, so gering wie möglich ist. Die Oberfläche der Führungsrollen 16 ist an den Riemen 4 angepasst um einen optimalen Reibschluss zu erhalten. Die Führungsrollen 16 müssen im Gegensatz zu den Drehrollen 14 nicht (schnell) auswechselbar sein, da der Riemen 4, bis auf Wartungsarbeiten wegen Verschleiß, immer gleich oder ähnlich ist/bleibt, und somit die Oberflächenrauheit der Führungsrollen 16 gleichbleiben kann.

Bei der insbesondere in Figs. 3 und 4 dargestellten Ausführungsform, bei der die Abdeckung 17 zur Veranschaulichung entfernt wurde, ist zu erkennen, dass die zumindest zwei Drehrollen 14 am ersten und zweiten Greifelement 11, 12 entlang der dritten Richtung Z zwischen den jeweils zumindest zwei Führungsrollen 16 angeordnet sind. Dabei sind die Drehrollen 14 in einer ersten Ebene E1 und die Führungsrollen 16 in einer zweiten Ebene E2 angeordnet. Die erste und die zweite Ebene E1, E2 sind zueinander parallel verschoben. Durch diese Anordnung wirkt der Riemen 4 unter einem Versatz auf die Drehrollen 14. Der Versatz erhöht den Umschlingungswinkel bzw. die Kontaktfläche und dadurch den Reibschluss.

Im Folgenden wird noch eine bevorzugte Ausführungsform eines Verfahrens zum Drehen einer Leitung 20 beschrieben. Das Verfahren weist zumindest die folgenden Schritte auf. Zunächst erfolgt ein Positionieren der zu drehenden Leitung 20 entlang der ersten Richtung X. Das Positionieren kann beispielsweise mit Hilfe eines Leitungsspanners erfolgen.

Optional kann die Greifeinheit 10 der Vorrichtung 1 dann bis zu einer geeigneten oder vorbestimmten Stelle entlang der Leitung 20 bewegt werden. Insbesondere erfolgt ein Positionieren der Greifeinheit 10 an einer beliebigen Stelle entlang der Leitung 20, und Bewegen der Greifeinheit 10 entlang der dritten Richtung Z quer, insbesondere senkrecht, zur ersten Richtung X, bis die Leitung 20 entlang der Achse A zentrisch zwischen den Drehrollen 14 angeordnet ist.

Dann erfolgt ein Greifen der Leitung 20, indem zumindest das erste und das zweite Greifelement 11, 12 der Greifeinheit 10 entlang der zweiten Richtung Y, die quer, insbesondere senkrecht, zur ersten Richtung X liegt, aufeinander zu und dabei auf die Leitung 20 zu bewegt werden. Das Auf-einander-zu-bewegen der Greifelemente 11, 12 wird solange fortgesetzt, bis Drehrollen 14 an dem ersten und zweiten Greifelement 11, 12 in Kontakt mit der Leitung 20 kommen und die Leitung 20 greifen. Schließlich erfolgt ein Antreiben des Riemens 4 des Riemengetriebes 2, der in Verbindung mit den Drehrollen 14 steht, so dass die Drehrollen 14 in Drehung versetzt werden. Durch die Drehung der Drehrollen 14 wird die Leitung 20 um eine Achse A entlang der ersten Richtung X, d.h. um ihre Längsachse, gedreht.

Das Drehen D der gegriffenen Leitung 20 um die Achse A entlang der ersten Richtung X erfolgt bevorzugt solange bis eine gewünschte Ausrichtung der Leitung 20 erreicht ist. Danach kann ein Lösen der Leitung 20 von der Greifeinheit 10 durchgeführt werden, indem zumindest das erste und das zweite Greifelement 11, 12 der Greifeinheit 10 entlang der zweiten Richtung Y voneinander weg und dabei von der Leitung 20 wegbewegt werden. Die gedrehte Leitung 20 kann dann beispielsweise mit Hilfe des Leitungsspanners, insbesondere zu folgenden Prozessmodulen an einer Kabelkonfektionsanlage, weiterbewegt werden. Die Vorrichtung 1 ist bereit für einen neuen Zyklus des Verfahrens.

### BEZUGSZEICHENLISTE

- 1: Vorrichtung
- 2: Riemengetriebe
- 4: Riemen
- 6: Antrieb
- 10: Greifeinheit
- 11: erstes Greifelement
- 12: zweites Greifelement
- 14: Drehrollen
- 16: Führungsrollen
- 17: Abdeckung
- 18: Aussteifungen
- 20: Leitung
- A: Achse
- D: Drehung
- E1: erste Ebene
- E2: zweite Ebene
- S: Spalt
- X: erste Richtung
- Y: zweite Richtung
- Z: dritte Richtung

## Patentansprüche

1. Vorrichtung (1) zum Drehen einer Leitung (20) um eine Achse (A) entlang einer ersten Richtung (X), d. h. um die Längsachse der Leitung (20), aufweisend:
a. ein Riemengetriebe (2) mit einem Riemen (4) und einem Antrieb (6) zum Bewegen des Riemens (4);
b. eine Greifeinheit (10) zum Greifen der Leitung (20), wobei die Greifeinheit (10) zumindest ein erstes und ein zweites Greifelement (11, 12) aufweist, das erste und zweite Greifelement (11, 12) zwischen einem geöffneten und einem geschlossenen Zustand der Greifeinheit (10) bewegt werden kann, und das erste und zweite Greifelement (11, 12) mit dem Riemengetriebe (2) verbunden ist;
c. zumindest zwei Drehrollen (14) pro Greifelement (11, 12), wobei die mindestens zwei Drehrollen (14) jeweils an dem ersten und zweiten Greifelement (11, 12) angeordnet sind, mit dem Riemen (4) in Verbindung stehen, und über das Riemengetriebe (2) gedreht werden können;
**dadurch gekennzeichnet, dass**
d. die gegriffene Leitung (20) im geschlossenen Zustand der Greifeinheit (10) gleichzeitig über die zumindest zwei Drehrollen (14) an jedem Greifelement (11, 12) kontaktierbar ist und durch die Drehrollen (14) in Drehung (D) versetzt werden kann.

2. Vorrichtung nach Anspruch 1, bei dem die Drehrollen (14) synchron gedreht werden.

3. Vorrichtung nach Anspruch 1 oder 2, bei dem die Oberflächen der Drehrollen (14) eine vorbestimmte Rauigkeit aufweisen, um eine optimale Haftreibung mit der Leitung (20) zu erreichen.

4. Vorrichtung nach einem der Ansprüche 1 - 3, weiterhin aufweisend zumindest zwei Führungsrollen (16), die jeweils an dem ersten und zweiten Greifelement (11, 12) angeordnet sind, um den Riemen (4) entlang einer dritten Richtung (Z), quer, insbesondere senkrecht, zu der ersten Richtung (X), zu führen.

5. Vorrichtung nach Anspruch 4, bei dem die zumindest zwei Drehrollen (14) am ersten und zweiten Greifelement (11, 12) zwischen den jeweils zumindest zwei Führungsrollen (16) angeordnet sind, und die Drehrollen (14) in einer ersten Ebene (E1) und die Führungsrollen (16) in einer zweiten Ebene (E2) angeordnet sind, wobei die erste und die zweite Ebene (E1, E2) zueinander parallel verschoben sind, so dass der Riemen (4) mit einem Versatz auf die Drehrollen (14) wirkt.

6. Vorrichtung nach einem der Ansprüche 1 - 5, bei dem die Greifeinheit (10) entlang einer dritten Richtung (Z), insbesondere senkrecht, zur Leitung (20) bewegt werden kann, und die Leitung (20) greifen und drehen kann.

7. Verfahren zum Drehen einer Leitung (20), insbesondere mit Hilfe einer Vorrichtung nach einem der Ansprüche 1 - 6, aufweisend die Schritte:
a. Positionieren der um eine Achse (A) entlang einer ersten Richtung (X), d. .h. um die Längsachse der Leitung (20), zu drehenden Leitung (20) entlang der ersten Richtung (X);
b. Greifen der Leitung (20), indem zumindest ein erstes und ein zweites Greifelement (11, 12) einer Greifeinheit (10) entlang einer zweiten Richtung (Y), die quer, insbesondere senkrecht, zur ersten Richtung (X) liegt, aufeinander zu und dabei auf die Leitung (20) zu bewegt werden, bis jeweils zumindest zwei Drehrollen (14) an dem ersten und zweiten Greifelement (11, 12) in Kontakt mit der Leitung (20) kommen und die Leitung (20) greifen;
c. Antreiben eines Riemens (4) eines Riemengetriebes (2), der in Verbindung mit den Drehrollen (14) steht, so dass die Drehrollen (14) in Drehung versetzt werden, und dadurch die Leitung (20) um die Achse (A) entlang der ersten Richtung (X) gedreht wird.

8. Verfahren nach Anspruch 7, weiterhin aufweisend den Schritt:
Positionieren der Greifeinheit (10) an einer beliebigen Stelle entlang der Leitung (20), und Bewegen der Greifeinheit (10) entlang einer dritten Richtung (Z) quer, insbesondere senkrecht, zur ersten Richtung (X), bis die Leitung (20) entlang der Achse (A) zentrisch zwischen den Drehrollen (14) angeordnet ist.

9. Verfahren nach Anspruch 7 oder 8, weiterhin aufweisend die Schritte:
Drehen (D) der gegriffenen Leitung (20) um die Achse (A) entlang der ersten Richtung (X) bis eine gewünschte Ausrichtung der Leitung (20) erreicht ist; und danach
Lösen der Leitung (20) von der Greifeinheit (10), indem zumindest das erste und das zweite Greifelement (11, 12) der Greifeinheit (10) entlang der zweiten Richtung (Y) voneinander weg und dabei von der Leitung (20) wegbewegt werden.

## Claims

1. Device (1) for turning a line (20) about an axis (A) along a first direction (X), that is to say about the longitudinal axis of the line (20), having:
a. a belt drive (2) which has a belt (4) and has a drive (6) for moving the belt (4);
b. a gripping unit (10) for gripping the line (20), wherein the gripping unit (10) has at least a first and a second gripping element (11, 12), the first and second gripping elements (11, 12) can be moved between an open state and a closed state of the gripping unit (10), and the first and second gripping elements (11, 12) are connected to the belt drive (2);
c. at least two rotating rollers (14) for each gripping element (11, 12), wherein the at least two rotating rollers (14) are respectively arranged on the first and second gripping elements (11, 12), connected to the belt (4) and rotatable via the belt drive (2); **characterized in that**,
d. in the closed state of the gripping unit (10), the gripped line (20) is simultaneously able to be made contact with via the at least two rotating rollers (14) on each gripping element (11, 12) and is able to be set in rotation (D) by the rotating rollers (14).

2. Device according to Claim 1, in which the rotating rollers (14) are rotated synchronously.

3. Device according to Claim 1 or 2, in which the surfaces of the rotating rollers (14) have a predetermined roughness for achieving an optimum static friction with the line (20).

4. Device according to one of Claims 1-3, further having at least two guide rollers (16) which are respectively arranged on the first and second gripping elements (11, 12) in order to guide the belt (4) transversely, in particular perpendicularly, to the first direction (X) along a third direction (Z).

5. Device according to Claim 4, in which the at least two rotating rollers (14) on the first and second gripping elements (11, 12) are arranged between the respectively at least two guide rollers (16), and the rotating rollers (14) are arranged in a first plane (E1) and the guide rollers (16) are arranged in a second plane (E2), wherein the first and second planes (E1, E2) are displaced parallel to one another so that the belt (4) acts on the rotating rollers (14) with an offset.

6. Device according to one of Claims 1-5, in which the gripping unit (10) can be moved, in particular perpendicularly to the line (20), along a third direction (Z) and can grip and turn the line (20).

7. Method for turning a line (20), in particular with the aid of a device according to one of Claims 1 - 6, comprising the steps of:
a. positioning the line (20) to be turned about an axis (A) along a first direction (X), that is to say about the longitudinal axis of the line (20), along the first direction (X);
b. gripping the line (20) in that at least a first and a second gripping element (11, 12) of a gripping unit (10) are moved towards one another, and in the process towards the line (20), along a second direction (Y), which is transverse, in particular perpendicular, to the first direction (X), until respectively at least two rotating rollers (14) on the first and second gripping elements (11, 12) come into contact with the line (20) and grip the line (20);
c. driving a belt (4) of a belt drive (2) that is connected to the rotating rollers (14), so that the rotating rollers (14) are set in rotation and the line (20) is consequently turned about the axis (A) along the first direction (X).

8. Method according to Claim 7, further comprising the step of:
positioning the gripping unit (10) at any point along the line (20) and moving the gripping unit (10) transversely, in particular perpendicularly, to the first direction (X) along a third direction (Z) until the line (20) is arranged centrally between the rotating rollers (14) along the axis (A).

9. Method according to Claim 7 or 8, further comprising the steps of:
turning (D) the gripped line (20) about the axis (A) along the first direction (X) until a desired orientation of the line (20) has been reached; and then
releasing the line (20) from the gripping unit (10) in that at least the first and second gripping elements (11, 12) of the gripping unit (10) are moved away from one another, and in the process from the line (20), along the second direction (Y).

## Revendications

1. Dispositif (1) permettant de faire tourner un câble (20) autour d'un axe (A) le long d'une première direction (X), c'est-à-dire autour de l'axe longitudinal du câble (20), comportant :
a. une transmission à courroie (2) avec une courroie (4) et un entraînement (6) pour déplacer la courroie (4) ;
b. une unité de préhension (10) pour saisir le câble (20), l'unité de préhension (10) comportant au moins un premier et un deuxième élément de préhension (11, 12), le premier et le deuxième élément de préhension (11, 12) pouvant être déplacés entre un état ouvert et un état fermé de l'unité de préhension (10), et le premier et le deuxième élément de préhension (11, 12) étant reliés à la transmission à courroie (2) ;
c. au moins deux rouleaux de rotation (14) par élément de préhension (11, 12), les au moins deux rouleaux de rotation (14) étant disposés chacun sur le premier et le deuxième élément de préhension (11, 12), étant reliés à la courroie (4) et pouvant être tournés par la transmission à courroie (2) ;
**caractérisé en ce que**
d. le câble (20) saisi peut être mis en contact simultanément par les au moins deux rouleaux de rotation (14) sur chaque élément de préhension (11, 12) lorsque l'unité de préhension (10) est fermée et peut être amené en rotation (D) par les rouleaux de rotation (14).

2. Dispositif selon la revendication 1, les rouleaux de rotation (14) étant tournés de manière synchrone.

3. Dispositif selon la revendication 1 ou 2, dans lequel les surfaces des rouleaux de rotation (14) présentent une rugosité prédéfinie pour obtenir un frottement statique optimal avec le câble (20).

4. Dispositif selon l'une des revendications 1 à 3, comportant par ailleurs au moins deux rouleaux de guidage (16), qui sont disposés chacun sur le premier et le deuxième élément de préhension (11, 12) pour guider la courroie (4) le long d'une troisième direction (Z), transversalement, en particulier perpendiculairement, à la première direction (X).

5. Dispositif selon la revendication 4, dans lequel les au moins deux rouleaux de rotation (14) sont disposés sur le premier et le deuxième élément de préhension (11, 12) entre les au moins deux rouleaux de guidage (16), respectivement, et les rouleaux de rotation (14) sont disposés dans un premier plan (E1) et les rouleaux de guidage (16) dans un deuxième plan (E2), le premier et le deuxième plan (E1, E2) étant coulissés parallèlement l'un à l'autre, de sorte que la courroie (4) agit sur les rouleaux de rotation (14) avec un décalage.

6. Dispositif selon l'une des revendications 1 à 5, dans lequel l'unité de préhension (10) peut être déplacée le long d'une troisième direction (Z), en particulier perpendiculairement au câble (20), et peut saisir et faire tourner le câble (20).

7. Procédé pour faire tourner un câble (20), en particulier à l'aide d'un dispositif selon l'une des revendications 1 à 6, comportant les étapes :
a. positionnement du câble (20) à faire tourner autour d'un axe (A) le long d'une première direction (X), c'est-à-dire autour de l'axe longitudinal du câble (20), le long de la première direction (X) ;
b. préhension du câble (20) par déplacement au moins d'un premier et d'un deuxième élément de préhension (11, 12) d'une unité de préhension (10) l'un vers l'autre le long d'une deuxième direction (Y) qui est transversale, en particulier perpendiculaire, à la première direction (X), et par déplacement vers le câble (20), jusqu'à ce qu'au moins deux rouleaux de rotation (14) sur le premier et le deuxième élément de préhension (11, 12) viennent en contact avec le câble (20) et saisissent le câble (20) ;
c. entraînement d'une courroie (4) d'une transmission à courroie (2), qui est reliée aux rouleaux de rotation (14) de telle sorte que les rouleaux de rotation (14) sont amenés en rotation, et par conséquent le câble (20) est tourné autour de l'axe (A) le long de la première direction (X).

8. Procédé selon la revendication 7, comportant par ailleurs l'étape :
positionnement de l'unité de préhension (10) sur un emplacement quelconque le long du câble (20), et déplacement de l'unité de préhension (10) le long d'une troisième direction (Z) transversalement, en particulier perpendiculairement, à la première direction (X) jusqu'à ce que le câble (20) soit disposé au centre entre les rouleaux de rotation (14) le long de l'axe (A).

9. Procédé selon la revendication 7 ou 8, comportant par ailleurs les étapes :
rotation (D) du câble (20) saisi autour de l'axe (A) le long de la première direction (X) jusqu'à obtention d'une orientation souhaitée du câble (20) ; et ensuite
détachement du câble (20) de l'unité de préhension (10) en écartant au moins le premier et le deuxième élément de préhension (11, 12) de l'unité de préhension (10) le long de la deuxième direction (Y) l'un de l'autre et ce faisant du câble (20).
